# EUROPEAN PATENT APPLICATION

(11) **EP 1 898 373 A1**
(43) Date of publication of application: **12.03.2008**
(21) Application number: 07253208.8
(22) Date of filing: 15.08.2007
(51) Int. Cl.: G07F 19/00, G06Q 20/00

(54) **Managing emv applications at an ifx atm**

(30) Priority: 31.08.2006 US 513576
(71) Applicant: NCR Corporation, Dayton, Ohio 45479 (US)
(72) Inventor: Stephen Neil MacPhail, Dundee DD2 1PB (GB); Bruce Shepherd, Camoustie Angus (GB)
(74) Representative: Williamson, Brian

(57) **Abstract**

Methods, systems, and software are disclosed for configuring an ATM. The ATM receives one or more configuration messages in an XML-based format. The ATM interprets the one or more configuration messages. The ATM alters one or more ATM operations based on at least a portion of the one or more configuration messages.

## Description

Automated teller machines (sometimes abbreviated as ATMs) can be configured to allow users to perform various financial transactions at any time. For example, many financial institutions, or banks, have one or more ATMs from which users (or customers) may withdraw cash from a checking or savings account that corresponds to a card provided by the user. ATMs can also include devices called financial self-service terminals and kiosks. ATMs can perform one or more of a large number of user transactions in addition to simply withdrawing cash such as depositing cash or checks in an account, checking the balance in an account, and transferring funds between accounts. ATMs can also perform one or more of a large number of administrative transactions including updating ATM software and replenishing the cash supply of the ATM.

ATMs may be connected to a host computer of the acquiring institution by communications links. The communications links may be non-persistent, requiring the ATM to reinitiate communications with the host computer of the acquiring institution. The communications links may be persistent, requiring dedicated bandwidth.

Currently, when a bank would like to introduce a new application to its ATM network, it must often do it in a manner which disrupts the functionality of the ATMs, often causing the ATMs to be out of service during updates. For example, the updating of the supported financial applications at an ATM is often performed manually, requiring a service technician to physically go to an ATM and insert a CD, for example, into the ATM to update it. A full software distribution capability is also sometimes employed, where software is downloaded to the ATM by a software management sector of the bank, but this can be an expensive undertaking. This poses another inconvenience, as the software management department of the bank is often separate from the ATM management department, and coordinating and communicating between the separate departments for frequent updates can prove difficult or unwieldy.

In accordance with the present invention, a system and method for managing financial applications at an ATM are provided which substantially eliminate or reduce disadvantages and problems associated with previous systems and methods.

In general, in one aspect, the invention features a method for configuring an automated teller machine (ATM), wherein the ATM supports a first set of applications. In general, in another aspect, the invention features a system for configuring an automated teller machine (ATM). In general, in another aspect, the invention features software, stored on a tangible storage medium, for operating an automated teller machine (ATM).

The present disclosure provides a secure manner in which the applications that an ATM or ATMs support may be updated automatically and with little disruption to functionality via the same communication infrastructure which manages ATM transactions. Additionally, because the messages used in this infrastructure are XML-based, this provides a level of interoperability for various institutions.
FIG. 1 is a diagram of a system for performing remote diagnostics and configuration of an ATM according to one exemplary embodiment.
FIG. 2 is a diagram of a system for performing remote diagnostics and configuration of an ATM according to one exemplary embodiment.
FIG. 3 is a flow chart of a method for managing financial applications at an ATM using configuration messages.
FIG. 4A and 4B are flow charts of example methods of altering the set of financial applications supported by an ATM.
FIG. 5 is a flow chart of an example method of authorizing a transaction.

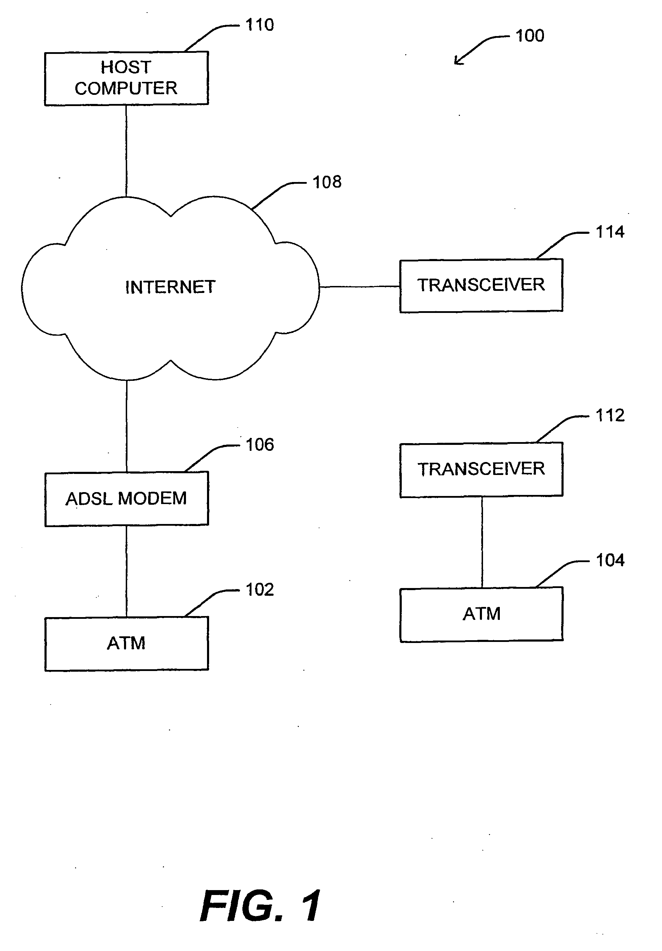

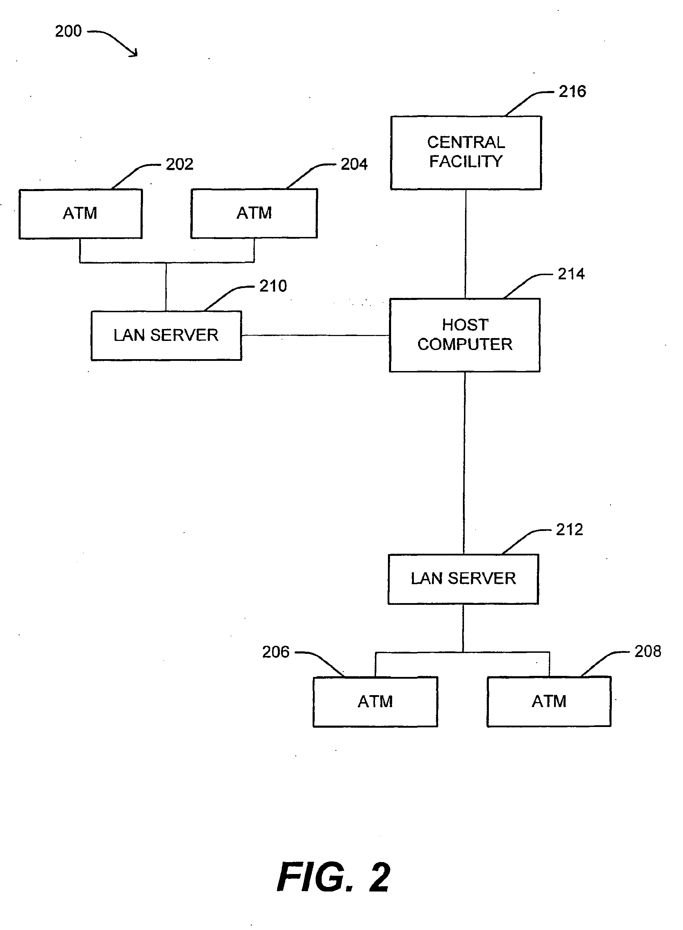

The ATM application management software, system and methods disclosed herein have particular application for, but are not limited to, groups of ATMs that are networked together for central administration. Figures 1 and 2 illustrate different examples of system configurations for performing remote management of ATMs. Many different configurations, systems, and technologies for coupling computers and ATMs using communications links may be utilized to perform remote management of ATMs.

In Figure 1, the system 100 includes two ATMs 102, 104, each with a communications link to a host computer 110. In the example of Figure 1, the host computer is coupled to the Internet 108. ATM 102 communicates with a computer in the Internet 108 over an Asymmetric Digital Subscriber Line (ADSL) using an ADSL modem 106. ATM 104 communicates with a computer in the Internet 108 over a wireless connection established by two transceivers 112, 114 that exchange electromagnetic waves that are modified in a predetermined manner to indicate information. While ATMs 102, 104 may have different data transfer rates, each is coupled to the host computer 110 through a communications link that includes the Internet 108 in this example.

In Figure 2, the system 200 includes four ATMs 202, 204, 206, 208 that are organized into two groups of two. Each group of ATMs is associated with a local area network (LAN) server 210, 212. System 200 may be used when multiple ATMs are associated with particular physical locations. For example, a bank or a shopping mall may have two or more ATMs. The first group of ATMs 202, 204 is coupled to LAN server 210. As one example, the ATMs 202, 204 may use an Ethernet protocol (such as Ethernet, 100Base-T, or Gigabit Ethernet) and architecture to route messages to and from the LAN server 210. Other LAN protocols and architectures may also be used. The second group of ATMs 206, 208 is coupled to LAN server 212. The LAN servers 210, 212 are coupled to the host computer 214, for example in a Wide Area Network (WAN). The communications between the LAN servers 210, 212 and the host computer 214 may travel through a public network such as the telephone system or the Internet. The communications between the LAN servers 210, 212 and the host computer 214 may also travel through private telecommunications devices such as a leased line or a satellite. While system 200 shows only two LAN servers 210, 212, additional LANs with two or more ATMs could be added. For example, a banking company may have hundreds of branches with each branch including one or more ATMs that are connected to a LAN for that branch. A LAN server employed with a particular bank branch may be called a branch controller. The LAN need not be dedicated to the ATMs. For example, computers used by branch employees may also be connected to the LAN and the WAN to send and receive information. As an alternative embodiment, the ATMs 202, 204 may only send information to the LAN server 210 and not to the host computer 214. An employee of the branch with LAN server 210 may then determine whether to send a group of ATM communications on to the host computer 214 or an automatic process may be performed, for example at the end of the day. A central facility 216 may also be provided to store information received from the ATMs. For example, the host computer 214 may store information received from the ATMs 202, 204, 206, 208 for a set time period and forward older information to be stored at the central facility 216.

While Figures 1 and 2 illustrate particular network configurations, many other configurations are possible. For example, a single ATM may communicate with a single computer through a dial-up link. In other words, the ATM establishes a call only as part of the process for sending a message and does not maintain the call at other times. Such a call may occur over a copper wire connection or using a wireless connection established by a mobile phone as two examples. In addition, many different communications protocols may be used to encode information transmitted from the ATM(s), including but not limited to Transmission Control Protocol/Internet Protocol (TCP/IP), Synchronous Optical NETwork (SONET), and Code Division Multiple Access (CDMA). The information transmitted using these protocols may be compressed prior to transmission using, for example, one of several known compression techniques. The communications hardware includes but is not limited to electrical wires or cables, optical cables, and wireless transmitters and receivers. It should be noted that other embodiments of the system may include any number of ATMs, grouped in any of a number of ways, which communicate with a host computer or computers over various communications links. Additionally, this communication may involve the Internet, as shown in Figure 1, but it may instead involve a corporate or branch intranet, for example. It should be noted that the communications between the ATMs and various computers may follow a protocol or set of specifications. For example, the communications may follow the Interactive Financial eXchange (IFX) financial messaging protocol, which employs Extensible Markup Language (XML)

In one embodiment, the ATMs shown in Figures 1 and 2 are accessible by users for user transactions. The ATMs may include buttons, a card scanner, or a touch-sensitive screen by which the ATM receive instructions and information from a user. One example ATM may have a card scanner, a screen, a group of number keys, and a group of buttons next to the screen. The ATM is programmed to have a transaction ready state where a user may initiate a transaction by inserting a card containing an integrated circuit, commonly referred to as a smart card. The ATM has suitable hardware to read the data stored on the smart card to determine what information is on the card. In certain instances and applications, the communication between the ATM and the integrated circuit card of the user may be governed by the Europay MasterCard Visa (EMV) Integrated Circuit Card Specifications for Payment Systems. Once the ATM has read the card, the ATM can display a request for a code to be entered using the number keys. The ATM can then wait a predetermined amount of time to receive the code. If the correct code is entered, the ATM can then provide options with a graphical indication of the button that corresponds to each option to guide the customer through a transaction. The example ATM with these structures is configured to allow user transactions in which the ATM both displays information to the user and receives information from the user. The same structures can be used to perform administrative transactions. For example, a particular card and code can be used to initiate a transaction by a bank employee who inserted cash to replenish the ATM.

In general, the ATM can have the capabilities to perform general types of transactions such as debit, credit, balance transfer, or balance inquiry. Certain of these general types of transactions may have one or more specific implementations in the ATM based on the hardware capabilities and software configuration of the ATM. For example, the ATM can perform a debit transaction where the user enters the amount using the keypad (e.g., withdrawal) or a debit transaction where the user selects an amount from a set of amounts (e.g., fast cash withdrawal). The transactions available at an ATM, whether directed to users or administrative purposes, vary according to the hardware modules and/or software modules associated with the ATM. The hardware modules and/or software modules together define the types of operations of the ATM. For instance, an ATM can have a bill dispenser as a hardware module with associated software modules that allow users to request debit transactions. The operations associated with the debit transaction may include communicating with the bill dispenser, changing the display screen, dispensing cash, printing a receipt, and any other operation necessary to complete the requested debit transaction. In order for an ATM to perform or deny certain transactions, the ATM may check and communicate which types of software modules or applications the ATM is configured to support. The applications the ATM is configured to support may be updated remotely via the embodiments discusses herein.

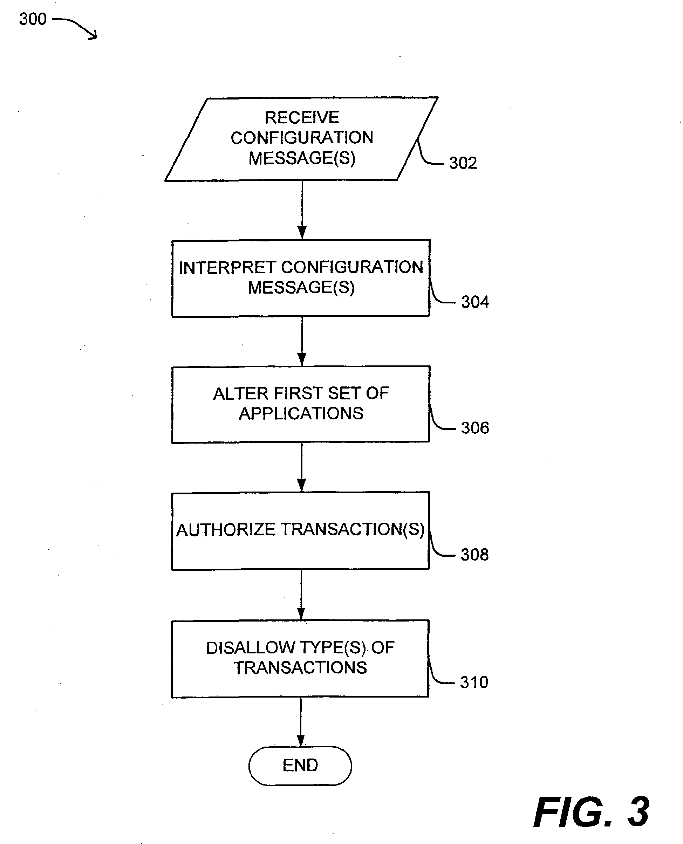

Figure 3 illustrates an example method for configuring an ATM, shown generally at 300. The ATM performing method 300 in Figure 3 is equipped to support a first set of applications. These applications, in general, may be stored on the chip of the user's smart card and may be financial applications such as EMV applications. Additionally, these applications may be identified via universal identifier codes or application identifiers. In certain embodiments, the ATM stores a first list of application identifiers corresponding to the first set of applications (i.e. the applications supported by the ATM).

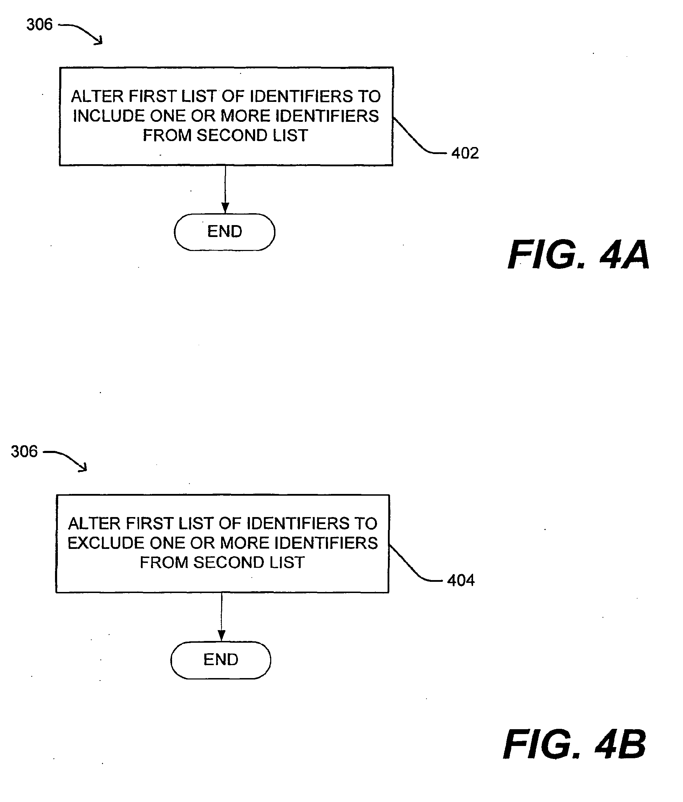

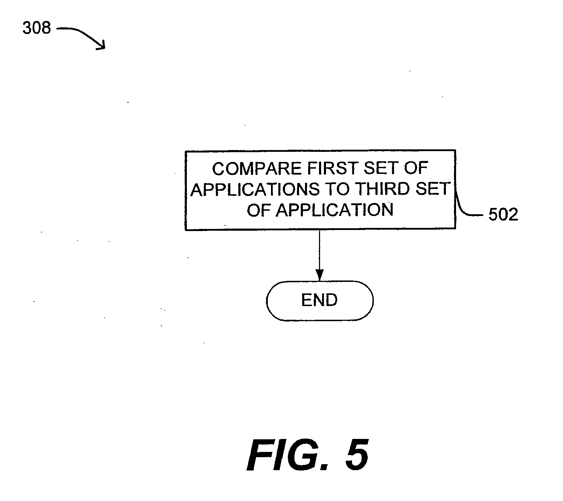

In block 302, the ATM receives one or more configuration messages that are in an XML-based format from a host computer such as host computers 214 or 110. In some example implementations, the XML-based format may be based, at least in part on an Interactive Financial eXchange (IFX) format. The message or messages indicate a second set of financial applications. In certain implementations, the one or more configuration messages sent to the ATM contain a second list of application identifiers corresponding to the second set of applications. After receiving the one or more configuration messages, the ATM interprets the received configuration message or messages (block 304). In certain example implementations, the interpretation includes searching and reading data from the one or more configuration messages. Based on the one or more configuration messages, the ATM alters the first set of applications (i.e., the applications supported by the ATM) in block 306, which is described in greater detail in Figures 4A and 4B. In some example implementations, once the ATM has altered the first set of applications, if a user requests one or more transactions, the ATM authorizes one or more transactions in block 308, which is described in greater detail in Figure 5. In some example implementations, the user may request a transaction by inserting a smart card into the ATM. Finally, in some example implementations, the ATM disallows certain types of transactions (block 310).

Fig. 4A is a flow chart showing an example method of altering the first set of applications, i.e., the applications supported by the ATM (block 306, which is discussed above with respect to Fig. 3). In some example implementations, altering the first set of applications (block 306) comprises altering the first list of identifiers to include one or more of the identifiers from the second list of identifiers from the configuration message or messages (block 402). The updated first list of identifiers is stored in the ATM.

Fig. 4B is a flow chart showing another example method of altering the first set of applications, i.e. the applications supported by the ATM (block 306, which is discussed above with respect to Fig. 3). In some example implementations, altering the first set of applications (block 306) comprises altering the first list of identifiers to exclude one or more of the identifiers from the second list of identifiers (from the configuration message or messages) (block 404).

Because the financial applications themselves are stored on a customer's smart card, for example, updating the first list of application identifiers updates the applications the ATM supports. That is, in Figure 4A, the ATM is increasing the number of applications it supports, and in Figure 4B, the ATM is decreasing the number applications it supports.

Figure 5 is a flow chart showing an example method of authorizing one or more transactions (block 308, which is discussed above with respect to Figure 3). In some example implementations, authorizing a transaction or transactions (block 308) includes comparing the first set of applications (i.e., the applications supported by the ATM) to a third set of applications required by the transaction being requested (block 502). It should be noted that disallowing a type or types of transactions (block 310 in Figure 3) can, in certain example embodiments, also include comparing the first set of applications to the third set of applications (block 502).

It should be noted that the embodiments depicted in Figures 1 through 5 are not meant to be exhaustive or limiting in scope. For example, authorizing a transaction (block 308) and disallowing a type of transaction (block 310) in Figure 3 may not be present in certain embodiments, and in other example embodiments, one or both may be included. Additionally, altering the first list of application identifiers may include either or both of the embodiments of the method shown in Figures 4A and 4B. That is, the ATM may include, exclude, or include some and exclude other application identifiers found in the second list of identifiers in the one or more configuration messages.

The foregoing description of the embodiments of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A method for configuring an automated teller machine (ATM), wherein the ATM supports a first set of applications, the method comprising: receiving one or more configuration messages specifying a second set of applications; interpreting the one or more configuration messages;
altering the first set of applications supported by the ATM based, at least in part, on the one or more configuration messages; wherein the applications are defined by protocol, data, and instructions for the interoperability and acceptance of integrated circuit cards for financial transactions; and wherein the one or more configuration messages are in an XML-based format.

2. The method of claim 1, wherein: the ATM is configured to store a first list of identifiers of the applications in the first set of applications; and the one or more configuration messages include a second list of identifiers of the applications in the second set of applications.

3. The method of claim 1 or claim 2, wherein altering the first set of applications supported by the ATM based, at least in part, on the one or more configuration messages includes: altering the first list of identifiers of the applications in the first set of applications to include one or more of the identifiers in the second list.

4. The method of claim 2, wherein altering the first set of applications supported by the ATM based, at least in part, on the one or more configuration messages includes: altering the first list of identifiers of the applications in the first set of applications to exclude one or more of the identifiers in the second list.

5. The method of any preceding claim, additionally comprising: authorizing a transaction requiring a third set of applications, based, at least in part, on the first set of applications supported by the ATM.

6. The method of claim 5, wherein authorizing a transaction requiring a third set of applications, based, at least in part, on the first set of applications supported by the ATM includes: comparing the first set of applications supported by the ATM to the third set of applications required by the transaction.

7. The method of any preceding claim, additionally comprising: disallowing one or more types of transactions based, at least in part, on the first set of applications supported by the ATM.

8. A system for configuring an automated teller machine (ATM), the system comprising: an ATM that includes one or more hardware modules and one or more software modules; a communication link coupled to the ATM; a computer coupled to the communication link; and wherein the ATM supports a first set of applications and is configured to: receive and interpret one or more configuration messages specifying a second set of applications; perform one or more actions based, at least in part, on the one or more configuration messages; and wherein the one or more configuration messages from the computer in an XML-based format.

9. The system of claim 8, wherein the ATM is further configured to: alter one or more operations of the ATM based, at least in part, on the one or more configuration messages.

10. The system of claim 9, where when altering one of the one or more operations of the ATM, based, at least in part, on the one or more configuration messages, the ATM is further configured to: disallow one or more types of transactions.

11. The system of any of claims 8 to 10, wherein: the ATM is configured to store a first list of identifiers of the applications in the first set of applications; and the one or more configuration messages include a second list of identifiers of the applications in the second set of applications.

12. The system of any of claims 8 to 11, wherein the ATM is additionally configured to: authorize a transaction requiring a third set of applications, based, at least in part, on the first set of applications supported by the ATM.

13. The system of claim 12, wherein the ATM is additionally configured to: compare the first set of applications supported by the ATM to the third set of applications required by the transaction.

14. Computer software, stored on a tangible storage medium, for operating an automated teller machine (ATM) comprising one or more processors, one or more hardware modules, and one or more software modules, wherein the ATM supports a first set of applications, wherein the ATM is configured to store a first list of identifiers of the applications in the first set of applications, and wherein the software comprises executable instructions that cause at least one of the one or more processors to: receive one or more configuration messages, wherein: the one or more configuration messages specify a second set of applications; the one or more configuration messages include a second list of identifiers of the applications in the second set of applications; the one or more configuration messages are in an XML-based format; and interpret the one or more configuration messages.

15. The software of claim 14, further comprising executable instructions that cause the at least one of the one or more processors to alter one or more operations of the ATM based, at least in part, on the one or more configuration messages.

16. The software of claim 15 wherein the executable instructions further: alter in the ATM the first list of identifiers of the applications in the first set of applications, based, at least in part, on the second list of identifiers of the applications in the second set of applications.

17. The software of claim 15, wherein the executable instructions that cause the at least one of the one or more processors to alter the one or more operations of the ATM based, at least in part, on the one or more configuration messages, further cause the one or more processors to: disallow one or more types of transactions.

18. The software of any of claims 14 to 17, wherein the executable instructions further: authorize a transaction requiring a third set of applications, based, at least in part, on the first set of applications supported by the ATM

19. The software of claim 18 wherein the executable instructions further: compare the first set of applications supported by the ATM to the third set of applications required by the transaction.
